# EUROPÄISCHE PATENTSCHRIFT

(11) **EP 0 610 751 B1**
(45) Veröffentlichungstag und Bekanntmachung des Hinweises auf die Patenterteilung: **23.09.1998**
(21) Anmeldenummer: 94101272.6
(22) Anmeldetag: 28.01.1994
(51) Int. Cl.: B01J 19/30

(54) **Wirbelschichtkörper**
Contact elements for fluidised bed
Eléments de contact pour lit fluidisé

(30) Priorität: 10.02.1993 DE 4303838
(43) Veröffentlichungstag der Anmeldung: 17.08.1994
(73) Patentinhaber: BAYER AG, 51368 Leverkusen (DE)
(72) Erfinder: Dummersdorf, Hans-Ulrich, Dr., D-51399 Burcheid (DE)

(56) Entgegenhaltungen:
- WO-A-91/08048
- DE-A- 2 020 144
- FR-A- 1 347 507
- FR-A- 1 483 819
- GB-A- 1 204 781
- US-A- 2 212 932

## Beschreibung

Die Erfindung betrifft ein Verfahren zur Stoffübertragung in einer mit frei beweglichen Wirbelschichtkörpern gefüllten Stoffaustauschkolonne in der eine gasförmige Phase mit einer flüssigen Phase in Kontakt gebracht wird. Typische Stoffübertragungsvorgänge sind die Absorption, Desorption, Destillation, Extraktion und Staubabscheidung. Stoffübertragungsvorgänge, wie die oben genannten, sind dadurch charakterisiert, daß gasförmige, flüssige oder feste Stoffe in der Stoffaustauschkolonne von einer flüssigen oder gasförmigen Phase in eine andere flüssige oder gasförmige Phase oder auch Feststoff von einer gasförmigen in eine flüssige Phase (Staubabscheidung) transferiert werden. Je nach Gestaltung des Phasenkontaktes durch stoffübertragungsverbessernde Einbauten unterscheidet man, von Spezialformen zur Extraktion einmal abgesehen, im wesentlichen zwischen Bodenkolonnen und Füllkörper- bzw. Packungskolonnen. In Bodenkolonnen werden die in den Stoffaustausch zu bringenden Phasen auf diskreten Böden in intensiven Kontakt miteinander gebracht, während Füllkörperkolonnen ein Einbautenkontinuum aus regellos angeordneten spezifischen Formkörpern aufweisen.

Als Füllkörper sind die seit langem traditionell bekannten Raschig-Ringe oder Berlsättel im Einsatz, neue moderne Füllkörpertypen, wie Ralu-Ringe, Torussättel oder Telleretten weisen eine Gitterstruktur auf und nutzen im Gegensatz zu den vorgenannten nicht die geometrische Oberfläche, sondern die Tropfen- und Strähnenbildung in ihrem Inneren zur Stoffübertragung. Zusätzlich sind hydrophilierte Typen auf dem Markt, die eine bessere Benetzung der Füllkörperoberfläche ermöglichen. Generell kann gesagt werden, daß bereits eine fast unübersehbare Formenvielfalt existiert, die sich bezüglich der Hydrodynamik und der Stoffübertragungseigenschaften nur unbeträchtlich unterscheiden. Packungskolonnen mit festen regelmäßig angeordneten Packungen besitzen ebenfalls das beschriebene Einbautenkontinuum, haben aber eine regelmäßige geometrische Struktur. Sie zeichnen sich durch hohe Stoffübertragungsfläche, niedrige Druckverluste und eine niedrige mögliche Flüssigkeitsbelastung aus. Beispiele dafür sind verschiedene Ausführungen von Sulzer- oder Montz-Packungen.

In jüngerer Zeit wurde ein neueres Verfahren, vorwiegend zur Absorption entwickelt - die Absorption in der Wirbelschicht nach DE-PS 3 613 151. In diesem Verfahren werden in einer Kolonne in mehreren Wirbelkammern mit spezifisch ellipsoidförmig ausgebildeten Wirbelelementen, - im Folgenden Ellipsoid-Elemente genannt -, mehrere Wirbelschichten ausgebildet, in welchen der Stoffübergang gegenüber statischen Packungen intensiviert werden kann, so daß entsprechende Kolonnen eine geringere Höhe aufweisen, als beispielsweise Füllkörperkolonnen. Durch die höhere Gasbelastbarkeit (Flutpunkt) solcher Wirbelschichten wird es möglich, Gasbelastungen bis 4 m/s zur fahren (Füllkörperkolonnen etwa 2 m/s). Dies erbringt den Vorteil, daß Wirbelschichtkolonnen nicht nur niedriger, sondern auch mit einem geringeren Durchmesser gegenüber Füllkörperkolonnen gebaut werden können - bei gleicher Trennleistung.

Ein ähnliches Verfahren zum Stoffaustausch zwischen Gasen und Flüssigkeiten in einem Wirbelbettwäscher mit ellipsoiden Füllkörpern ist auch in WO 91/08048 beschrieben. Wesentlich ist dabei, daß die Gasgeschwindigkeit, die Gasmenge und die Flüssigkeitsmenge so aufeinander abgestimmt werden, daß die Ellipsoide fluidisiert und zu einer taumelnden Bewegung angeregt werden. Entscheidend ist dabei, daß sich ein Druckgradient im Füllkörper- bzw. Wirbelbett von mehr als 1500 Pa/m einstellt. Die Waschflüssigkeit wird hierbei im Gegenstrom zum Gas durch das Ellipsoid-Bett geleitet.

Es stellte sich die Aufgabe, Möglichkeiten zu finden, das hydrodynamische Verhalten und die Stoffübertragungseigenschaften in einer Wirbelschicht wesentlich zu verbessern, damit die Gasbelastbarkeit der Wirbelschichtkolonne zu erhöhen, die spezifischen Druckverluste zu erniedrigen, sowie die Stoffübertragungsgeschwindigkeit zu erhöhen.

Die Aufgabe wird erfindungsgemäß dadurch gelöst, daß die die Wirbelschicht bildenden Wirbelkörper eine andere geometrische Form erhalten, als bisher üblich. Abweichend von den bisher üblichen Kugel- bzw. Ellipsoidformen gelangen Wirbelkörper zum Einsatz, deren Form eine charakteristische Asymmetrie aufweist.

Gegenstand der Erfindung ist ein Verfahren zur Stoffübertragung in einer mit frei beweglichen Wirbelschichtkörpern gefüllten Stoffaustauschkolonne, bei dem die Stoffübertragungsgeschwindigkeit in der Kolonne durch den Einsatz asymmetrisch eiförmiger oder tropfenförmiger Wirbelschichtkörper erhöht wird, die sich innerhalb der Wirbelschicht permanent in Rotation um eine Vielzahl von Raumträgheitsachsen befinden und deren Asymmetrie darin besteht, daß der als Schnittpunkt der Raumdiagonalen, des kleinstmöglichen, den Wirbelschicht einhüllenden Quaders definierte geometrische Mittelpunkt nicht mit dem Massenschwerpunkt des Wirbelschichtkörpers zusammenfällt.

Typische Beispiele für eine solche Form sind hühner-(vogel)eiförmige oder tropfenförmige Gebilde. Im nachfolgenden soll verkürzend stets von einem hühnereiförmigen Wirbelkörper als typischen Vertreter für eine asymmetrisch eiförmige Ausführungsform die Rede sein. Ausgehend von Überlegungen zum hydrodynamischen Verhalten solcher oben beschriebener Körper in der Wirbelschicht, die im nachfolgenden noch näher erläutert werden, wurde auch experimentell überraschend gefunden, daß beim Einsatz solcherart geformter Wirbelkörper gegenüber den den Stand der Technik repräsentierenden Ellipsoid-Elementen die Stoffübertragung in der Wirbelschicht gravierend gesteigert werden kann und gleichzeitig der spezifische Druckverlust je Übertragungseinheit ebenfalls in überraschendem Maße gesenkt werden kann. Dieser Sachverhalt steht auch in gewisser Weise im Widerspruch zu den üblichen Erfahrungen in der Verfahrensteclmik, daß eine Erhöhung der Stoffübertragung in einem beliebigen System in der Regel durch eine Erhöhung der Druckverluste (= höherer Energieaufwand) erkauft werden muß.

Die Wirkung der hühnereiförmigen Wirbelkörper in der Wirbelschicht läßt sich folgendermaßen erklären und auch im Experiment beobachten: Die geometrische Struktur des eiähnlichen Wirbelkörpers führt zu einem strömungsgünstigeren Verhalten sowohl in der Gas- als auch in der sich entgegengesetzt bewegenden Flüssigkeitsströmung. Die Strömung liegt im überwiegenden Maße mehr an der Oberfläche der eiförmigen Wirbelkörper an und es kommt zu keinem Abriß der Strömungsgrenzschicht und den damit verbundenen Druckverlusten. Die Ei-Kontur nähert sich mehr an die Form eines bekanntermaßen strömungstechnisch idealen Flüssigkeitstropfen an. Auch wenn der eiformige Wirbelkörper quer zur Strömung steht, werden auftretetenden Gasströme nicht so stark aus ihrer ursprünglichen Strömungsrichtung umgelenkt, wie z. b. beim Ellipsoid-Wirbelkörper, so daß auch hier die Druckverluste abnehmen. Die entscheidende positive Wirkung auf die Verbesserung des Stoffüberganges muß darin gesehen werden, daß der unregelmäßig geformte (asymmetrisch) eiförmige Wirbelkörper gegenüber dem Ellipsoid-Element mit nur einer Hauptträgheitsachse und einer weiteren Hauptträgheitsebene sich innerhalb der Wirbelschicht permanent in Rotation um eine Vielzahl von Raumträgheitsachsen befindet, d. h. innerhalb der bereits sehr turbulenten Wirbelschichten kommt als weiterer Freiheitsgrad die stark unregelmäßige Eigenrotation (Trudeln und Pendeln) der Wirbelkörper hinzu, die zu einer Steigerung der Turbulenzen in der Nähe der einzelnen Wirbelkörper und damit zu einer schnelleren Erneuerung der Phasengrenzfläche führt. Ein solcher Körper erhält infolge der ungleichmäßig um seinen geometrischen Mittelpunkt gruppierten Masse, umd damit auch der Projektionsfläche in eine Ebene senkrecht zu Anströmrichtung, durch die Strömung ein permanentes Drehmoment vermittelt. Übertaschenderweise sind die dadurch zusätzlich im Wirbelbett ausgelösten Turbulenzen, offenbar bedingt durch den o. g. gegerläufigen hydrodynamischen Effekt, nicht mit einer Erhöhung der Druckverluste verbunden, sondern im Gegenteil sogar mit einer Absenkung derselben verknüpft. Die Erhöhung der Stoffübertragungsgeschwindigkeit um z. B. ein Mehrfaches wird also nicht über eine bloße

Erhöhung der Druckverluste erkauft, sondern lediglich durch die Veränderung der Form der Wirbelkörper erreicht. Die beschriebenen Veränderungen in der Ausbildung der Hydrodynamik in der Wirbelschicht, verursacht durch die asymmetrische Eiform bzw. der Tropfenform der Wirbelkörper, sind sehr gut visuell im Experiment zu beobachten

Der erfindungsgemäße Wirbelkörper besitzt bei seiner Anwendung folgende Vorteile:
1. Reduzierung des Kolonnenvolumens in Höhe und Durchmesser
2. Erhebliche Verbesserung der Stoffübertragung, insbesondere bei hohen Gas- und niedrigen Flüssigkeitsbelastungen
3. Geringere spezifische Druckverluste, insbesondere bei hohen Geschwindigkeiten
4. Einsatz anstelle teurer Packungen in breiten Parameterbereichen
5. Einsparung von Investitions- und Betriebskosten bei Stoffübertragungsprozessen auch insbesondere für große Gasmengenströme und Rauchgase
6. Einsatz der erfindungsgemäßen Wirbelschichtkörper ist nicht nur für die Absorption, sondern auch für andere Stoffübertragungsprozesse (Desorption, Staubabscheidung, Destillation, katalytische Reaktionen in der Wirbelschicht) möglich.

Im folgenden wird die Erfindung anhand von Zeichnungen und Ausführungsbeispielen näher erläutert.

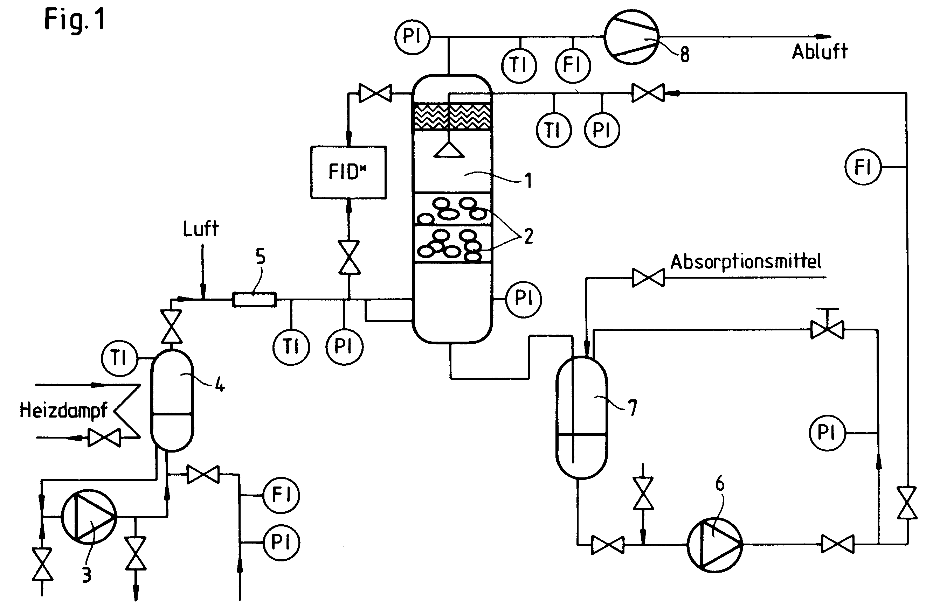

Es zeigen
- Figur 1: Ein Fließbild für einen Absorptionsprozeß in einer Wirbelschichtkolonne unter Verwendung der erfindungsgemäßen Wirbelkörper
- Figur 2: Einen asymmetrisch eiförmigen Wirbelschichtkörper mit dem einhüllenden Quader
- Figur 3 bis Figur 5: Verschiedene Ausführungsformen von anderen asymmetrischen Wirbelkörpern und
- Figur 6 bis Figur 8: Diagramme mit vergleichenden Meßergebnissen für die asymmetrisch eiförmigen und handelsüblichen ellipsoiden Wirbelkörper

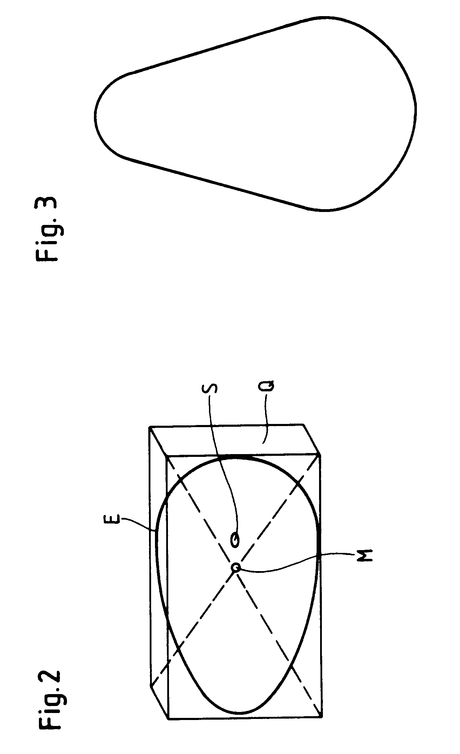

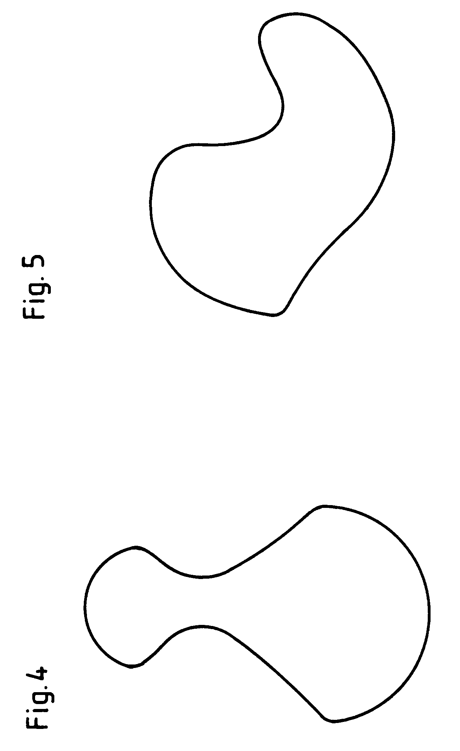

In einer Kolonne 1, die mit zwei Wirbelkammern 2 ausgerüstet ist, wird die Absorption von organischen Schadstoffen (z.B. Aceton) mit dem Absorptionsmittel Wasser durchgeführt. Das durch die Lösungsmittelpumpe 3 in die Lösungsmittelvorlage 4 geführte Lösungsmittel wird unter Beheizung der Lösungsmittelvorlage 4 in durchströmendem Stickstoff bis nahe an den Sättigungszustand angereichert und in der Mischstrecke 5 mit einem Umgebungsluftstrom gemischt. Die Absorption findet in einer Wirbelkammer 2 der Kolonne 1 durch mittels der Pumpe 6 aus der Absorptionsmittelvorlage 7 gefördertes Frischwasser statt, mit welchem die Kolonne im Durchlauf belastet wird. Das Gebläse 8 fördert den zu absorbierenden Luftstrom in den Kamin. Die Ein- und Austrittskonzentrationen in die Kolonne werden über Flammenionisationsdetektion gemessen und kontinuierlich erfaßt. Die Anlage arbeitet mit Durchsätzen im großtechnischen Maßstab. Es gelangen asymmetrische Wirbelkörper zum Einsatz, die in ihren äußeren Abmessungen der Größe und Form eines Hühnereis entsprechend, innen hohl sind und aus Kunststoff bestehen. Ein solcher Körper E ist z.B. in Figur 2 gezeigt. Zur Illustration ist auch der vollständig einhüllende Quader Q dargestellt, dessen Raumdiagonalen sich im geometrischen Mittelpurkt M schneiden. Rechts vom geometrischen Mittelpunkt liegt der Massenmittelpunkt oder Schwerpunkt S des Eies. Bei einem derartig asymmetrischen Körper fällt also im Gegensatz z.B. zu einem Ellipsoid der geometrische Mittelpunkt und der Schwerpunkt nicht zusammen. Figur 3 zeigt eine weitere Ausführungsform, bei der der Wirbelschichtkörper eine Tropfenform aufweist. In Figur 4 ist ein Wirbelschichtkörper mit einer asymmetrischen Hantelform dargestellt. Figur 5 zeigt ein weiteres Ausführungsbeispiel für solche unregelmäßig geformten Körper. Bei all diesen Körpern gilt das Kriterium, daß der Schwerpunkt an einer anderen Stelle liegt als der geometrische Mittelpunkt, wobei der geometrische Mittelpunkt als Schnittpunkt der Raumdiagonalen eines den Körper vollständig einschließenden Quaders definiert ist.

Die Körper können hohl oder massiv sein und werden zweckmäßig aus Kunststoff durch Spritzgießen oder Blasen hergestellt.

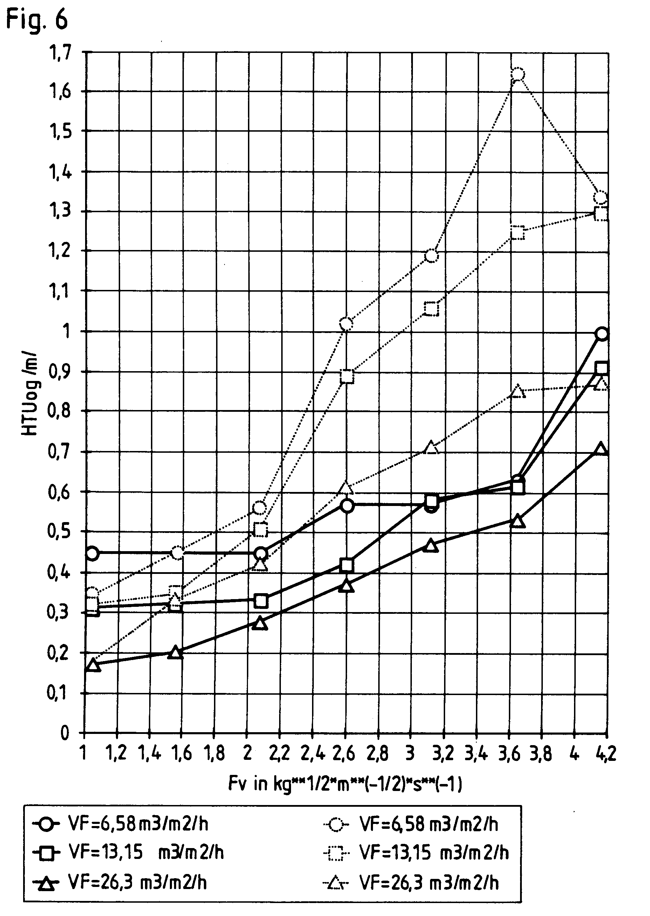

In Figur 6 ist die Höhe einer Übertragungseinheit HTUog (nach dem HTU/NTU-Modell; o-overall; g-gas) über der Gasbelastung (Fv-Faktor) mit dem Scharparameter Flüssigkeitsbelastung der Kolonne für das System Aceton/Wasser dargestellt, wobei einmal als Wirbelkörper handelsübliche Ellipsoid-Elemente und im zweiten Fall asymmetrisch hühnereiförmige Wirbelkörper von unwesentlich unterschiedlichem Gewicht zum Einsatz gelangen.

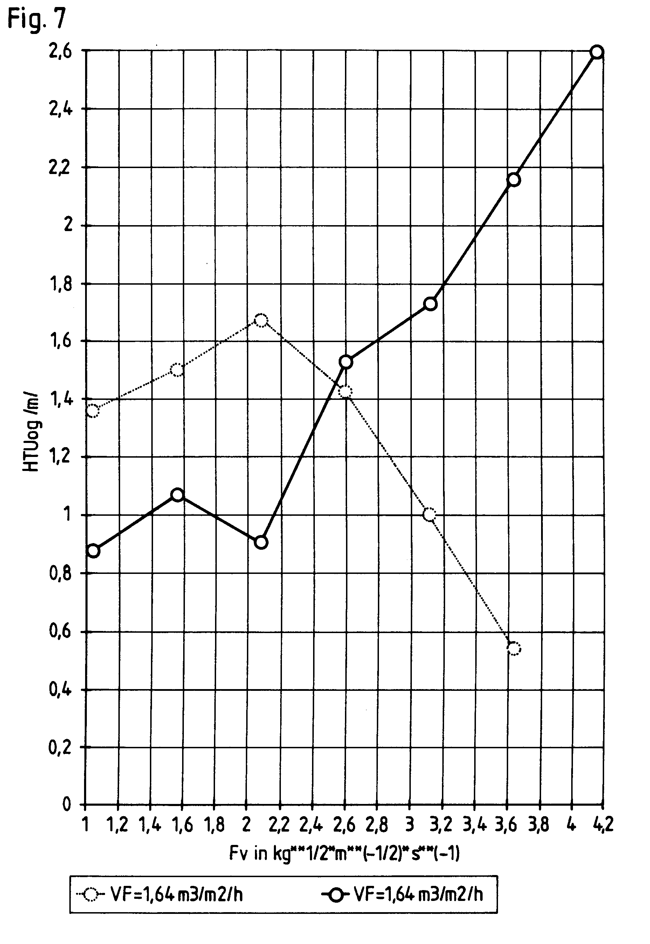

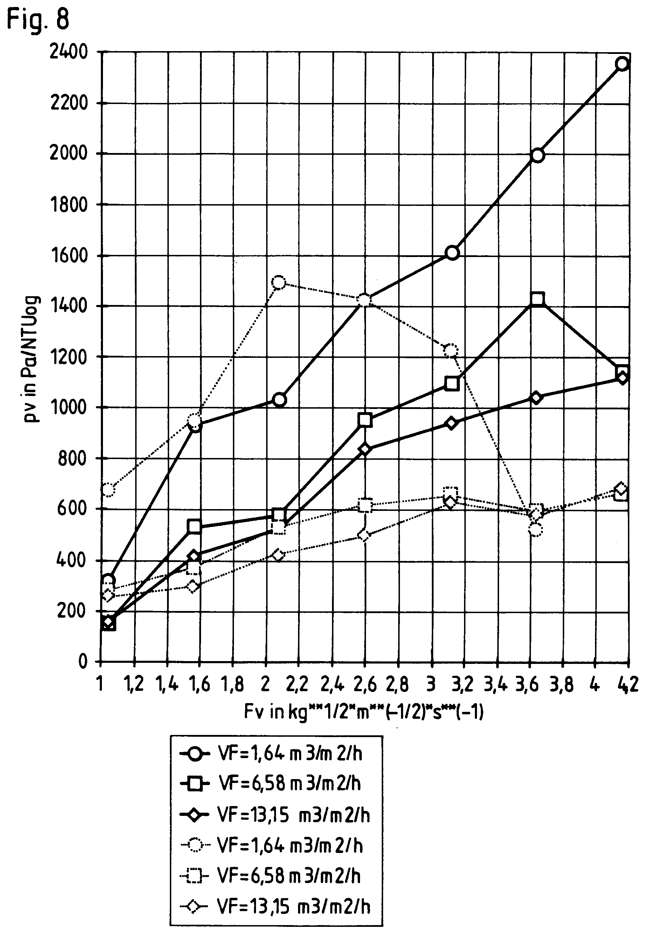

Man erkennt, daß man bei den asymmetrisch eiförmigen Wirbelschichtkörpern eine erheblich niedrigere HTUog-Höhe erreichen kann, als bei den handelsüblichen Wirbelkörpern. In der Praxis bedeutet dies, daß man denselben Stoffübergang mit einer Stoffaustauschkolonne geringerer Bauhöhe realisieren kann. Dies gilbt besonders im Bereich höherer Gasbelastungen, der für die Stoffübertragung aufgrund niedriger Investitionskosten besonders interessant ist. Während im unteren Gasbelastungsbereich (ruhende Wirbelkörper in der Wirbelschicht) kaum Unterschiede in der Stoffübertragung sichtbar werden, steigt die Wirksamkeit der erfindungsgemäßen Elemente im oberen Belastungsbereich stark an. Auch hier ist erkennbar, daß der erfindungsgemäße Wirbelkörper umso vorteilhafter wirkt, je niedriger die Flüssigkeitsbelastung wird, also ebenfalls in für Stoffübertragungszwecke vorteilhaften Betriebsbereichen der Kolonne. Hier läßt sich die Stoffübertragung auf bis zu 400 % gegenüber dem Ellipsoid-Element steigern - dies bedeutet eine Kolonnenhöhe von 25 % gegenüber einer mit Ellipsoid-Elementen ausgerüsteten Wirbelschichtkolonne. Dieser Sachverhalt ist besonders gut in Figur 7, wo extrem niedrige Flüssigkeitsbelastungen der Wirbelschichtkolonne dargestellt sind, zu erkennen. Als zweiter überraschender Effekt wurde festgestellt, daß der spezifische Druckverlust für die Realisierung einer Übertragungseinheit NTUog trotz erheblicher Verbesserung der Stoffübertragung bei Einsatz der asymmetrisch eiförmigen Wirbelkörper nicht nur nicht zunimmt, sondern demgegenüber sogar abnimmt. Das bedeutet in praxi, daß bei gleichen Energiekosten die Gasbelastung der Kolonne gesteigert werden kann, oder bei sonst gleichen Bedingungen der Kolonnendurchmesser und damit die Investitionskosten reduziert werden können. In Figur 8 ist der spezifische Druckverlust je Übertragungseinheit NTUog für das System Aceton/Wasser dargestellt, wobei erkennbar wird, daß dieser bei Einsatz von asymmetrisch eiförmigen Wirbelkörpern sich erheblich von dem durch Ellipsoid-Elemente verursachten unterscheidet. Dies gilt insbesondere wiederum für die für eine Absorption besonders interessanten Bereiche von hoher Gas- und niedriger Flüssigkeitsbelastung.

Ähnlich große Unterschiede hinsichtlich Stoffübertragung und Druckverlusten konnten auch bei anderen Stoffsystemen (Methanol/Wasser; DMF/Wasser) im Vergleich beobachtet und nachgewiesen werden.

## Patentansprüche

1. Verfahren zur Stoffübertragung in einer mit frei beweglichen Wirbelschichtkörpern gefüllten Stoffaustauschkolonne, in der eine gasförmige Phase mit einer flüssigen Phase in Kontakt gebracht wird, dadurch gekennzeichnet, daß die Stoffübertragungsgeschwindigkeit in der Kolonne durch den Einsatz asymmetrisch eiförmiger oder tropfenförmiger Wirbelschichtkörper erhöht wird, die sich innerhalb der Wirbelschicht permanent in Rotation um eine Vielzahl von Raumträgheitsachsen befinden und deren Asymmetrie darin besteht, daß der als Schnittpunkt der Raumdiagonalen des kleinstmöglichen, den Wirbelschichtkörper einhüllenden Quaders definierte geometrische Mittelpunkt nicht mit dem Massenschwerpurkt des Wirbelschichtkörpers zusammenfällt.

2. Verfahren nach Anspruch 1, dadurch gekennzeichnet, daß durch den Einsatz der eiförmigen Wirbelschichtkörper zusätzlich die Gasbelastbarkeit erhöht und/oder die spezifischen Druckverluste in der Kolonne erniedrigt werden.

3. Verfahren nach Anspruch 1 bis 2, dadurch gekennzeichnet, daß hohle, aus Kunststoff gefertigte, asymmetrische Wirbelschichtkörper verwendet werden.

## Claims

1. A process for mass transfer in a mass transfer column packed with freely movable fluidized bed contact elements, in which a gaseous phase is brought into contact with a liquid phase, characterised in that the rate of mass transfer in the column is increased by the use of asymmetrically egg-shaped or droplet-shaped fluidised bed contact elements which, within the fluidised bed, are permanently in rotation about a plurality of volume axes of inertia and the asymmetry of which lies in the fact that the geometric centre point, defined as the point of the intersection of the body diagonals of the smallest possible rectangular parallelepiped enveloping the fluidised bed contact element, does not coincide with the centre of mass of the fluidised bed contact element.

2. A process according to claim 1, characterised in that, due to the use of the egg-shaped fluidised bed contact elements, the gas loading capacity is also increased and/or the specific pressure drops in the column are reduced.

3. A process according to claim 1 to 2, characterised in that hollow, asymmetrical fluidised bed contact elements made of plastic are used.

## Revendications

1. Procédé de transfert de matière dans une colonne d'échange de matière remplie de corps de fluidisation à mouvement libre, dans laquelle une phase gazeuse est mise en contact avec une phase liquide, caractérisé en ce que la vitesse de transfert de matière dans la colonne est augmentée par l'utilisation de corps de fluidisation asymétriques en forme d'oeufs ou de gouttes, qui se trouvent en permanence en rotation autour d'un grand nombre d'axes inertiels spatiaux à l'intérieur de la couche fluidisée et dont l'asymétrie réside en ceci que le centre géométrique défini comme l'intersection des diagonales du plus petit parallélipipède possible enveloppant le corps de fluidisation ne correspond pas au centre de gravité du corps de fluidisation.

2. Procédé suivant la revendication 1, caractérisé en ce que, en plus, grâce à l'utilisation des corps de fluidisation en forme d'oeufs, la capacité de charge en gaz est augmentée et/ou les pertes de charges spécifiques sont diminuées dans la colonne.

3. Procédé suivant la revendication 1 ou 2, caractérisé en ce qu'on utilise des corps de fluidisation asymétriques creux, fabriqués en matière plastique.
